(19) Europäisches Patentamt
European Patent Office
Office européen des brevets

(11) **EP 2 614 458 B1**

(12) **FASCICULE DE BREVET EUROPEEN**

(45) Date de publication et mention de la délivrance du brevet:
**20.05.2015 Bulletin 2015/21**

(21) Numéro de dépôt: **11769769.8**

(22) Date de dépôt: **08.09.2011**

(51) Int Cl.:
*G06F 21/31* (2013.01)    *G06F 21/34* (2013.01)
*G06F 21/62* (2013.01)    *H04L 9/32* (2006.01)
*H04L 29/06* (2006.01)

(86) Numéro de dépôt international:
**PCT/EP2011/004514**

(87) Numéro de publication internationale:
**WO 2012/031755 (15.03.2012 Gazette 2012/11)**

(54) **PROCEDE D'AUTHENTIFICATION POUR L'ACCES A UN SITE WEB**

AUTHENTIFIZIERUNGSVERFAHREN ZUM ZUGANG AUF EINE WEBSEITE

METHOD OF AUTHENTIFICATION FOR ACCESS TO A WEBSITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.09.2010 FR 1003601**

(43) Date de publication de la demande:
**17.07.2013 Bulletin 2013/29**

(73) Titulaire: **Loginpeople SA**
**06560 Valbonne (FR)**

(72) Inventeur: **ISRAEL, Maurice**
**F-27630 Ecos (FR)**

(74) Mandataire: **Schuffenecker, Thierry**
**120 Chemin de la Maure**
**06800 Cagnes sur Mer (FR)**

(56) Documents cités:
**EP-A1- 1 669 833        US-A1- 2002 026 576**
**US-A1- 2007 186 103    US-B1- 6 678 731**
**US-B1- 6 826 686**

- **HALEVI S ET AL: "PUBLIC-KEY CRYPTOGRAPHY AND PASSWORD PROTOCOLS", ACM CONFERENCE ON COMPUTER AND COMMUNICATIONS SECURITY, XX, XX, 2 novembre 1998 (1998-11-02), pages 122-131, XP000986777, DOI: DOI:10.1145/288090.288118**

EP 2 614 458 B1

## Description

### Domaine technique de l'invention

La présente invention concerne les télécommunications numériques (internet) et plus particulièrement un procédé d'authentification pour l'accès à un site web sur le réseau internet ou sur un réseau Intranet.

### Etat de la technique

Le réseau Internet a suscité un développement spectaculaire des échanges numériques dans le monde entier via des applications en ligne sur des sites web. Une identité numérique (comprenant un identifiant dit "login" et un mot de passe) permet l'accès d'un utilisateur à une application sur ledit site web. Comme on le sait, les pirates et fraudeurs ont développé des outils et des techniques pour usurper de telles identités numériques, notamment les *"chevaux de Troie"*, les logiciels *"espions",* les *"keyloggeurs"* et les *renifleurs de réseau* tels que le "Man in the Middle". Par ces techniques, il leur devient possible de récupérer les identifiants et mots de passe d'un utilisateur régulièrement enregistré sur un site web, et de se faire passer pour lui auprès de ce site, et à son insu. La détection d'une telle fraude s'avère difficile en raison du fait que les données numériques peuvent être modifiées quasiment sans laisser de traces. En outre, l'attaque peut être portée instantanément depuis un ordinateur distant à des milliers de kilomètres, rendant particulièrement ardue toute protection, notamment sur le plan judiciaire.

La multiplication des usurpations d'identités numériques s'avère aujourd'hui être une menace majeure pour l'économie numérique en général et le commerce en ligne en particulier.

D'où il en résulte une source d'insécurité significative.

On connaît déjà des techniques pour améliorer la sécurité du contrôle d'accès pour les applications numériques. Désignées sous l'appelation *«authentification forte»,* elles ajoutent au contrôle de ce que l'utilisateur autorisé <u>sait</u> (son mot de passe), ce qu'il <u>possède</u> (un élément matériel) ou ce qu'il <u>est</u> (ses données biométriques comme par exemple ses empreintes digitales).

Une première technique connue sous l'appellation anglo-saxonne *"One Time Password"* consiste à doter chaque utilisateur légitime d'un dispositif électronique capable de générer un nombre aléatoire servant de mot de passe lors de sa connexion à l'application en ligne. Ainsi l'interception ou la capture du mot de passe ne permettra pas l'accès à l'application en question, parce que ce mot de passe ne sera plus valable dès lors qu'il aura déjà été utilisé et donc aura été valable une seule fois, d'où la dénomination de *One Time Password.*

Une autre technique connue sous le nom de *«hors bande»* consiste à envoyer un message sur un autre canal de communication, par exemple un SMS sur le téléphone mobile de l'utilisateur lorsque celui-ci souhaite se connecter à son système d'information ou au site web en question. La procédure d'authentification n'aboutit que lorsque le serveur web reçoit communication du code expédié à l'utilisateur via l'autre voie de communication. Il en résulte qu'un pirate aura beau intercepter et contrôler ce que l'utilisateur licite fait sur son poste de travail, il ne pourra cependant pas récupérer l'élément manquant transmis par le téléphone mobile et hors de portée de lui.

Une autre technique fondée sur les infrastructures à clés publiques (PKI) consiste à équiper le système de chaque utilisateur d'un certificat électronique. Lorsque l'utilisateur se connecte à l'application, le mécanisme de contrôle d'accès vérifie la présence dudit certificat sur son interface et valide une séquence d'authentification.

Une autre technique encore consiste à comparer le fichier biométrique de l'utilisateur autorisé, par exemple son empreinte digitale, avec une caractéristique biométrique de référence et stockée, soit dans une carte à puce ou dans le serveur de contrôle d'accès au moment de l'enrôlement de cet utilisateur.

Toutes ces techniques génèrent un jeton d'accès, dénommé dans la littérature anglo-saxonne par l'appellation *"token",* lequel permet l'authentification - en principe - du seul utilisateur légitime. Comme on le comprend, il apparaît fondamental dans toutes ces techniques qu'une seconde présentation de ce jeton (ie un nouveau *« jeu »* du jeton ou *token)* par un tiers ne puisse aboutir à une authentification illégitime et, par suite, une fraude sur le réseau.

Bien que ces techniques présentent une efficacité avérée et incontestable, il convient d'observer qu'elles ont été conçues et mises en oeuvre à une période précédent le déploiement massif de l'Internet tel qu'on le connaît aujourd'hui. A cet égard, ces techniques présentent aujourd'hui des inconvénients rédhibitoires alors même que la société évolue vers une économie complètement dématérialisée et que le grand public tend à généraliser l'usage du réseau Internet pour toutes sortes de transactions possibles. De ce fait, des techniques qui pouvaient apparaître efficaces et adaptées à un cercle restreint d'utilisateurs - à savoir des utilisateurs avertis capables d'installer sans difficulté des systèmes et logiciels sophistiqués sur leur machine - ces mêmes techniques présentent aujourd'hui des inconvénients rédhibitoires lorsqu'il s'agit de faire bénéificer le plus grand nombre des bénéfices résultant de l'utilisation du réseau Internet.

La demande de brevet européen 04368072.7 déposée le 1er Décembre 2004 par le titulaire de la présente requête décrit un procédé d'authentification très efficace basé sur la collecte des très nombreuses informations par le système d'exploitation, notamment celles requises pour lui permettre de vérifier la présence des pilotes pour l'interfaçage avec le système d'exploitation. Ces informations, une fois collectées, permettent la génération d'une information unique, caractéristique du système, et permettant de le distinguer des autres systèmes. Cette information-désignée sous l'appelation *« ADN du numérique »* ou ADNN par la société titulaire de la demande de brevet, permet d'accroître significativement la sécurité de la procédure d'authentification.

Le procédé qui est décrit dans la demande de brevet précitée renforce ainsi considérablement la sauvegarde de l'identité des personnes et ne requiert nullement la divulgation des éléments d'identité personnelle de l'utilisateur (nom, domicile, etc...). Ce procédé présente cependant l'inconvénient d'exposer de manière non opportune cette information numérique particulièrement sensible qu'est l'« ADN du numérique » rendant unique la machine de l'utilisateur.

Ainsi, tout tiers pourrait être amené à intercepter cette information «ADN numérique », de la détourner de son usage légitime et de procéder à une usurpation d'identité, ce que l'on souhaitait justement éviter.

Pour éviter une telle situation, il convient de disposer d'une technique spécifique, parfaitement adaptée à la protection de l'information ADNN notamment lors de son transit sur le réseau Internet.

Tel est le problème à résoudre par l'objet de la présente demande de brevet.

Les documents suivants sont des antériorités afférentes à la présente invention :

La demande de brevet EP 1 669 833 A1 déposée par la demanderesse décrit un procédé d'authentification basé sur la découverte d'une empreinte matérielle.

La demande de brevet US 2007/186103 A1 décrit un service d'authentification pour des applications connectées en réseau.

La demande de brevet US 6 678 731 décrit un accès contrôlé à un serveur d'authentification basé sur l'utilisation d'un ticket d'authentification.

La demande de brevet US 2002/026576 A1 décrit l'assignation d'un niveau de confiance à un ordinateur sur la base de métriques ayant des valeurs associées au dispositif matériel.

La demande de brevet US 6 826 686 B1 décrit un procédé et un dispositif pour une transmission sécurisée de passeport et des modifications de ce passeport.

Le document HALEVI S ET AL: "PUBLIC-KEY CRYPTOGRAPHY AND PASSWORD PROTOCOLS", ACM CONFERENCE ON COMPUTER AND COMMUNICATIONS SECURITY, XX, XX, 2 novembre 1998 , pages 122-131, XP000986777, traite de cryptographie à base de clé publique et de protocoles de mot de passe.

## Résumé de l'invention

C'est un but de la présente invention de réaliser une procédure d'authentification renforcée pouvant, le cas échéant, se substituer au traditionnel identifiant-mot (*login-password*) de passe tout en laissant à l'utilisateur la possibilité de définir lui-même le jeton *(token)* utilisé pour son authentification

C'est un autre but de la présente invention que d'assurer la protection du jeton utilisateur lors de son utilisation lors des diverses procédures d'authentification.

C'est un troisième but de la présente invention de contrôler l'accès à une application numérique en cours d'exécution sur un serveur distant géré par un fournisseur d'applications à partir d'un système de traitement de l'information exploité par un utilisateur autorisé.

C'est est un quatrième but de la présente invention de protéger l'identité numérique nécessaire pour accéder à une application numérique, de façon à prévenir le vol d'identité et l'usurpation de l'identité de l'utilisateur autorisé.

C'est un cinquième but de la présente invention de permettre l'utilisation d'une identité numérique afin de contrôler l'accès d'un système d'information IHS *(Information Handling System) à* une application numérique de telle sorte que si l'identité numérique s'avérait interceptée, elle ne puisse être utilisée pour accéder à l'application protégée.

C'est un sixième but de la présente invention de réaliser un système d'authentification forte ne nécessitant pas l'installation complexe d'un logiciel sur les machines génériques permettant l'accès du grand public au réseau Internet et aux sites web qui le composent.

C'est un septième but de la présente invention de réaliser cette authentification forte sans que l'utilisateur ait à transmettre sur le réseau une information privée sensible.

C'est un huitième but de la présente invention de réaliser un procédé d'authentification forte n'exigeant pas de l'utilisateur qu'il mémorise un mot de passe.

C'est enfin un neuvième but de la présente invention que de réaliser un procédé d'authentification forte qui soit complètement transparent pour l'utilisateur qui pourra procéder à son inscription et son authentification sur un site web de manière totalement automatique.

L'invention réalise ces buts au moyen d'un procédé d'authentification renforcé basé sur la collecte de données représentatives de composants matériels contenus dans un système (I.H.S), ledit procédé étant défini dans les revendications.

Ainsi l'invention permet d'utiliser avantageusement un ou plusieurs identifiant matériels choisis par l'utilisateur, de façon à réaliser un jeton-utilisateur *(user token)* permettant une authentification renforcée, et de protéger ce jeton au sein d'une procédure d'authentification intégrant un double *challenge-response.*

## Description des dessins

D'autres caractéristiques, but et avantages de l'invention apparaîtront à la lecture de la description et des dessins ci-après, donnés uniquement à titre d'exemples non limitatifs. Sur les dessins annexés :

La figure 1 illustre le principe d'une réalisation autorisant l'utilisateur à définir lui-même le jeton d'authentification intégrant un ou plusieurs éléments matériels pour la génération de l'information numérique ADNN.

La figure 2 illustre les échanges de flux selon l'invention.

## Description d'un mode de réalisation préféré

Les recherches conduites par le demandeur ont montré que l'information ADNN (ADN du numérique ® ) facilite de manière significative l'authentification forte entre un prestataire de service et un utilisateur du service, connecté par un LAN, un WAN ou Internet, à travers un ordinateur ou un *smartphone* (Symbian ®, iPhone®, Android®, Windows Mobile®). Dans une première étape d'enrôlement, l'utilisateur décide quel composant matériel va lui servir de token, ce qui l'authentifiera de manière unique par la suite.

En effet, comme on va le voir dans le premier mode de réalisation décrit ci-après, cette information numérique ADNN autorise l'utilisateur à procéder lui-même à la définition du jeton *(token)* qui lui servira d'authentification.

## I. Réalisation d'un procédé d'enrôlement et d'authentification

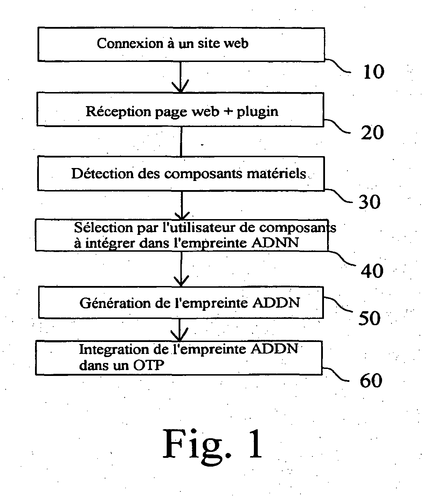

L'on décrit à présent, en relation avec la figure 1, une réalisation d'un procédé d'authentification permettant soit de se substituer à la méthode conventionnelle de l'identifiant/mot de passe *(login-pw),* soit de venir en complément de cette méthode pour renforcer significativement l'authentification de cet utilisateur au moyen d'un jeton *(token)* directement choisi par l'utilisateur.

Le procédé qui sera décrit ci-après met en oeuvre trois entités, à savoir un logiciel *client* tournant chez l'utilisateur, un site web accessible sur le réseau intranet ou internent, et un serveur d'authentification agissant en qualité de tiers de confiance, les trois éléments 100, 200 et 300 pouvant communiquer via des canaux sécurisés tels que CHAP *(Challenge Hardware Authentication Protocol)*, HTTPs , bien connus d'un homme du métier et qu'il n'est ni nécessaire ni opportun de développement plus avant.

Le procédé comporte une phase d'enrôlement, laquelle sera ensuite suivie d'une phase d'authentification.

1. Enrôlement.

L'on suppose que l'utilisateur souhaite se connecter sur un site Internet via le réseau internet et lance par conséquent son logiciel navigateur installé dans son système. Le procédé démarre par conséquent par une étape 10 qui est une connexion transmise au site web.

Dans une étape 20, le site web répond, par exemple au moyen d'une réponse de type 200 définie dans la RFC2616 portant sur le *HyperText Transfer Protocol* et bien connue d'un homme du métier, au moyen d'une page web comportant par exemple un plugin ou applet java, à savoir un code exécutable permettant l'exécution de la suite de la procédure décrite ci-après et commençant pas inviter l'utilisateur à présenter à un identifiant de connexion *(login)* assorti d'un mot de passe *(password)*.

En pratique, la réponse de l'étape 20 du site web pourra se conformer à une grande variété de situations et protocoles distincts. En effet, outre la bien connue page « 200 » du protocole http, l'on pourra considérer toutes les possibilités permettant l'ouverture d'une page d'authentification, notamment CHAP, MSCHAP (la version éditée par l'américain MICROSOFT Corp.) , mais également les versions BASIC et CHALLENGE RESPONSE, et également RADIUS *(Remote Access Dial-in User Service)* bien connues d'un homme du métier. Dans un mode de réalisation particulier, qui est celui choisi par le titulaire de la présente demande de brevet, un kit logiciel est proposé aux éditeurs de site web pour la mise en oeuvre des procédés décrits dans la présente demande.

Dans l'étape 20 peut comporter notamment la transmission par le serveur d'authentification d'une liste de classes correspondant à une liste de types de matériels et composants éligibles au calcul des empreintes ADNN du système de l'utilisateur. Cette liste peut comporter le type de processeur, la carte mère, des types de périphériques USB, voire de périphériques communiquant (tel q'un SMARTPHONE ou Portable Document Assistant (PDA) etc...

L'exécution de l'applet contenue dans la réponse reçue du site web provoque alors, dans une étape 30, une collecte des données, à savoir le démarrage d'une procédure de détection des composants matériels du système dans le but de recueillir des données auprès desdits composants au travers des pilotes et rapports au système d'exploitation.

D'une manière générale, on pourra s'inspirer largement des développements existants dans la demande de brevet européen 04368072.7 précitée, laquelle donne des exemples de composants pouvant être utilisés. Comme cela est décrit dans cette demande de brevet, un grand nombre d'informations concernant les divers composants matériels sont reportés au système d'exploitation, qu'il s'agisse de WINDOWS sous ses diverses moutures (XP, VISTA, WINDOWS 7...) ou LINUX etc, notamment dans le but de permettre le chargement des pilotes nécessaires à l'interfaçage du système d'exploitation avec ces composants. L'apport de la demande précitée, consiste à rassembler cette information significative, initialement destinée au fonctionnement « interne » du composant, dans le but de constituer une information numérique unique (ADNN) pouvant servir à la mise en oeuvre d'une opération d'authentification renforcée.

Ainsi, dans le cas d'une clé USB conventionnelle, on relève que jusqu'à 16 caractéristiques (la marque, le modèle, le numéro de série, la taille mémoire ... etc...) sont accessibles au système d'exploitation et peuvent être potentiellement utilisées pour la génération de l'information numérique désignée par l'appelation ADNN.

Dans un mode de réalisation particulier, la détection de composants est réalisée en se conformant à une liste de classes de classes définie par le site d'authentification et transférée depuis celui-ci lors de l'étape 20.

Une fois l'opération de détection achevée, le procédé propose à l'utilisateur, lors d'une étape 40, la sélection d'un sous-ensemble des composants identifiés lors de l'étape 30 dans le but de collecter les données accessibles au système d'exploitation et représentatives du sous-ensemble de composants sélectionnés par l'utilisateur. Dans un mode de réalisation, la sélection de l'utilisateur est une option par défaut, et l'absence de sélection par ce dernier conduit alors à la génération d'un jeton utilisateur intégrant un ensemble pré-déterminé de composants matériels présents dans le système, notamment tel que défini par l'administrateur du système.

Comme on le voit, l'utilisateur peut ainsi choisir, lors de l'étape 40, son ordinateur comme élément matériel ou bien un élément à mémoire connecté à son ordinateur (une clé USB, un lecteur MP3...) ou bien un smartphone. Le composant matériel sélectionné est celui depuis lequel va être extrait l'information qui permettra la génération ultérieure de l'information ADNN (l'ADN du numérique ®). L'utilisateur peut combiner plusieurs éléments physiques comme son ordinateur et une clef USB. Il pourra compléter le dispositif par un PIN code afin d'éviter l'utilisation abusive de son matériel en cas de perte ou de vol.

Dans une étape 50 , le procédé peut à présent effectuer un traitement de données visant à concatener les données brutes collectées lors de l'étape précédente dans le but de générer une information numérique représentative des composants matériels présents dans le système. Ces données brutes concatenées font ensuite l'objet d'une opération de hash dans le but de générer une information numérique de référence : désignée par l'appelation « l'ADN du numérique » ou ADNN. Cette information ADNN résulte donc de la transformation, au moyen d'un d'un algorithme de hash réalisé sur la chaîne de caractères concatenant les différentes informations extraites par l'OS des composants matériels. On pourra à cet égard considérer les algorithmes MD4 ou MD5 de M. Ronald Rivest, ou l'algorithme plus récent SHA mis au point par NIST.

Dans un mode de réalisation particulier, on effectue une empreinte particulière de cette information ADNN au moyen de l'opération suivante :

$$PKCS\_PBKDF2\_HMAC<SHA256> (sha256(pin\ code\ user) + hash(ADNN) + magic\ number + seed).$$

Le résultat de cette opération sera désigné, dans la suite, sous le vocable « empreinte ADNN ». Mais il ne s'agit que d'un exemple illustratif, nullement limitatif et l'on pourrait indifféremment considérer toute autre opération. Plus particulièrement, l'on pourrait même désigner la chaîne de caractères concatenées sous l'appelation ADNN et désigner sous le vocable « empreinte de l'ADNN » le résultat d'un hash sur cette chaîne de caractères.

De multiples variantes d'exécutions sont possibles. L'essentiel étant que l'empreinte ADNN qui est susceptible d'être transmise sur le réseau (dans une variante particulière) est le résultat d'au moins un hash pour assurer la protection de l'information originelle composée de la chaîne de caractères des composants matériels du système I.H.S. de l'utilisateur..

En effet, le recours à l'algorithme de HASH assure ici que les données brutes servant à la génération de l'information ADNN ne seront jamais divulguées. Le système peut effectuer une analyse de la qualité des données brutes pour déterminer si elle est satisfaisante pour une utilisation, comme certains composants numériques ne peuvent avoir suffisamment de critères d'unicité nécessaires.

Ne pouvant remonter aux données brutes, l'empreinte ADNN pourra être transmise au serveur d'authentification pour y être stockée et servir ultérieurement à des fins de vérification.

Alternativement, comme on va le voir à présent, il sera même possible de s'affranchir de la transmission de l'information numérique de référence ADNN, afin d'accroître encore la sécurité du procédé d'authentification.

A cet effet, le procédé poursuit avantageusement avec une étape 60 qui consiste en l'intégration de l'information numérique ADNN à la génération d'un mot de passe à usage unique (OTP), tel que défini notamment par la norme RFC 2289. A cet effet, l'on vient concatener l'information ADNN ou alternativement son empreinte, avec une semence (seed) fournie par le serveur d'authentification et le tout faisant l'objet d'une série d'opérations de hash dans le but de générer un OTP.

Dans un mode de réalisation particulier, on intègre l'information numérique de référence ADNN à une semence générée par un générateur quantique de manière à accroître considérablement la résistance du procédé d'authentification.

Dans un autre mode de réalisation, on intègre également dans l'OTP, en même temps que l'aléa quantique, le PIN code de l'utilisateur, un time stamp ainsi que l'information numérique de référence correspondant au serveur d'authentification. Il reste de cette combinaison multiple une grande robustesse au mécanisme d'OTP et, par conséquent, à la protection de l'information ADNN.

Comme on le voit, le procédé qui vient d'être décrit en référence à la figure 1 présente l'avantage significatif, que ne permettaient pas les techniques connues, de générer un jeton utilisateur (user token) puisque c'est ce dernier qui peut choisir le ou les composants qui serviront à générer l'information ADNN, laquelle peut ne jamais être transmise sur le réseau.

Par ailleurs, on notera qu'il est donné à l'utilisateur la possibilité d'enregistrer plusieurs « empreintes ADNN » de manière à lui permettre de créer plusieurs modalités différentes d'enrôlement et d'authentification, chacune étant liée, par exemple, à un composant matériel (clé USB, mobile etc...) distinct.

C'est là un avantage considérable de la solution préconisée. C'est l'utilisateur qui garde la maîtrise de la définition de l'élément matériel qu'il possède et qui servira à la constitution de son information ADNN et, par conséquent, l'authentifiera sur les sites Internet. Ainsi, ce n'est plus un matériel spécifique fourni par un prestataire qui assure cette authentification, mais c'est tout composant matériel susceptible de se connecter à l'ordinateur de l'utilisateur.

Le procédé décrit présente en outre un avantage décisif par rapport à d'autres techniques d'authentification forte, notamment basées sur la biométrie. En effet, les utilisateurs sont toujours réticents à l'idée de voir des données personnelles transiter sur les réseaux et cette inquiétude est parfaitement légitime. La solution qui est proposée permet un niveau de sécurité comparable (en raison de la grande diversité des composants matériels et des informations spécifiques remontées au système d'exploitation, par exemple 16 paramètres dans le cas d'une clé USB, jusqu'à 43 paramètres dans le cas d'un ordinateur), tout en préservant l'utilisateur d'une divulgation de ses données biométriques, donc permettant de connaître ou d'usurper son identité.

La technique proposée dans la présente demande de brevet, parce qu'elle substitue aux données biométriques une information bien moins personnelle - l'ADN du numérique - permet néanmoins d'assurer une authentification très performante. Et que l'on peut aisément réinitialiser en cas d'usurpation, contrairement aux données biométriques qui sont immuables.

La procédure d'enrôlement qui vient d'être décrite peut servir de support à une procédure d'authentification forte permettant de tirer avantage de l'empreinte ou de la diversité des empreintes ADNN crées par l'utilisateur.

2. Procédé d'authentification forte

La mise en oeuvre de la procédure d'authentification de l'OTP décrit précédemment (dit *OTP user token* pour exprimer le fait que c'est l'utilisateur qui définit lui-même le composant matériel servant à l'authentification) requiert la mise en place d'une fonctionnalité spécifique, et ce au moyen d'un code approprié présent dans sa page d'authentification) communique avec le poste client, lui même équipé d'un logiciel installé uniquement la première fois (appliquette JAVA, module ActiveX, plug-in, du navigateur, widget, autre...) :

1. Un certificat X509v3 original disposé sur le serveur d'authentification permet au navigateur de l'utilisateur de vérifier que l'identité du serveur n'a pas été usurpée (tentative de *phishing* ou hameçonnage par exemple)

2. L'utilisateur clique sur l'authentification par ADN du numérique qui a remplacé le couple « login-password » sur la page du site. Il doit renseigner uniquement son identifiant et le serveur vérifie la cohérence entre cet identifiant et son information numérique ADNN stockée, le cas échéant, sur le serveur. Il doit ensuite indiquer son code PIN - de manière optionnelle suivant le choix du site web concerné - pour s'authentifier.

3. L'information numérique de référence (ADNN ou ADN du Numérique® ) est calculée, soit à partir de l'ordinateur lui-même, par plusieurs des composants internes (carte mère, processeur, disque dur...) ou encore à partir d'un composant amovible (clé USB)). Il est ensuite complété optionnellement par le code PIN saisi par l'utilisateur. Une génération aléatoire (random) permet de créer le challenge avec le serveur mais également le chiffrement d'une résultante de hash. Ce hash [ADNN + random + identifiant + (PIN)] transite alors vers le serveur d'authentification via un tunnel chiffré conventionnel (https) tel que l'on rencontre dans un système OTP classique. Ce serveur d'authentification va alors directement autoriser (ou pas) la connexion au site web, ou va passer l'autorisation à un autre serveur (Active Directory, LDAP, ou Radius). En aucun cas, le client ne transmet le mot de passe en clair au serveur sous https.

## II. Mode de réalisation du procédé d'enrôlement et d'authentification

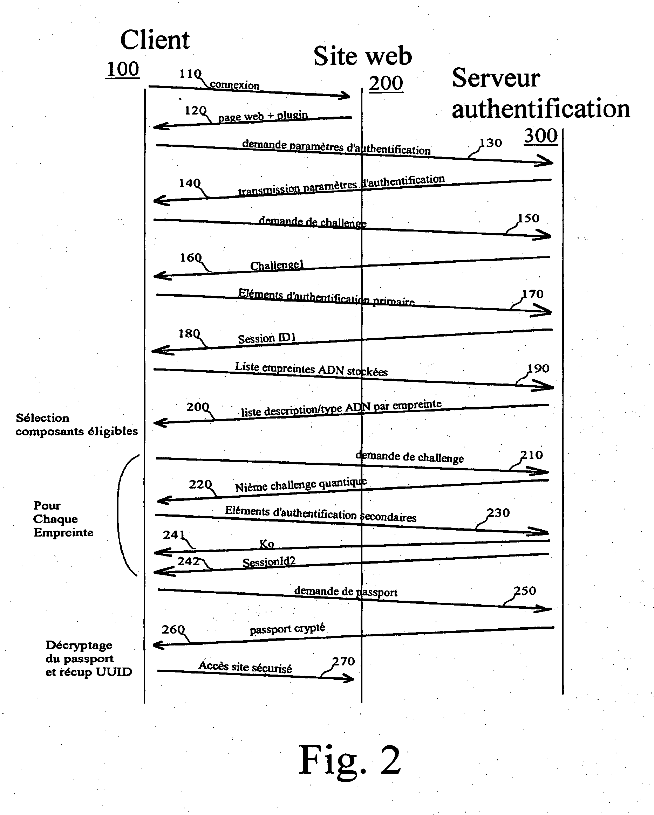

L'on décrit à présent, en relation avec la figure 2 un mode de réalisation venant préciser un exemple de procédure d'enrôlement et d'authentification selon l'invention.

Comme on le voit sur la figure, le procédé met en oeuvre le logiciel *client* 100 localisé au sein de l'ordinateur de l'utilisateur ou internaute, un site web 200 sur le Réseau Internet, et un serveur d'authentification 300 agissant en qualité de tiers de confiance, les trois éléments 100, 200 et 300 pouvant communiquer via des canaux sécurisés de type HTTPS bien connus d'un homme du métier.

Dans une étape 110, le procédé démarre par conséquent par une connexion transmise au site web.

Dans une étape 120, si l'application client pour la mise en oeuvre des procédures décrites ci-après n'est pas déjà installée sur le poste client, alors le site web répond au moyen d'une page web comportant un plugin ou applet java pour la mise en oeuvre des procédures et méthodes décrites ci-après, et commençant pas inviter l'utilisateur à présenter à un identifiant de connexion (*login*) assorti d'un mot de passe (*password*).

L'exécution de l'application client ou de l'applet contenue dans la réponse reçue du site web provoque alors, dans une étape optionnelle 130, une connexion au serveur d'authentification dans le but de solliciter les paramètres d'authentification, lesquels serviront à la génération du mot de passe OTP. D'une manière générale, les paramètres d'authentification fournissent la liste de classes de matériels éligibles pour permettre la connexion au serveur web considéré : CPU, carte mère, périphériques USB, smartphone, etc. La liste des classes éligibles est définie par l'administrateur du serveur. La liste est un string codé en base 64.

Puis, dans une étape 140, elle aussi optionnelle, le serveur d'authentification envoie une information représentative d'une liste de types de matériels et composants éligibles au calcul de l'ADNN caractéristique du système de l'utilisateur. Cette liste peut comporter le type de processeur, la carte mère, des types de périphériques USB, voir de périphériques communiquant (tel qu'un smartphone ou un Portable Document Assistant (PDA) etc...

Dans une étape 150, l'applet transmet un message sollicitant du serveur d'authentification 300 un challenge, conformément à la spécification de la norme RFC 2289.

Dans un mode de réalisation nullement limitatif, le message de requête du challenge, transmis dans l'étape 150 , comporte un certain nombre de paramètres, lesquels sont :

A titre d'exemple nullement limitatif, on pourra adopter un challenge et une séquence d'authentification telle que définie ci-après :

**DDNA User has the fields** :

```
- login = user login
- mobUid = mobUid returned byt he server
- authKey = generated strongkey ( also called authKey)
- userSettings :
- email
- password = SHA256 (user pin code)
refKeystore has the fields :
- cipherData = refKeystoreData;
- type = 0;
keystore has the fields :
- cipherData = keystoreData;
- dnaMetaData =
- challengeKey = dnaChallengeKey
- migrationKey = dnaMigrationKey
- description = dna.description
- type = dna.type
- deviceList =
 - description
 - deviceClass
- type = STRONG
```

**Initialisation**

```
openApi()
  list<Device>
  listConnectedDevices()
  policy
  getParameter(accountid, type)
  registerUser( login, userSettings(email,pin code>), dna( descirption, type,
 list<Devices>, Uid ))
  generateMobUid()
  mobUid
  addDnaUserKeystore(accountid, dnaUser, refkeystore, keystore)
```

**Generate passport**

```
  generate "refKeystoreData"
  generate "keystoreData"
  generate "dnaChallengeKey" et "dnaMigrationKey"
```

**Select Devices**

```
  - dnaChallengeKey = PKCS_PBKDF2_HMAC<SHA512> (SHA256 (pin code
  user) + qki_hash(selected devices) + magic_number, SALT2 )
  - dnaMigrationKey = qki_hash(selected devices)
  - mobUid = the mobUid returned by the server
  - strongKey(authKey) = SHA256 ( random, seI )
  - privKey = SHA256 ( random, seI )
  - ref_key = PKCS5_PBKDF2_HMAC<SHA512> (SHA256 (user pin code) +
  magic_number, SALT1)
  - refKeystoreData= Crypt_AES (passport, refKey)
  - key = PKCS5_PBKDF2_HMAC<SHA512> (SHA256 (user pin code) +
  qki_hash(selected devices) + magic_number, SALT2)
  - keystoreData= Crypt_AES (passport, key)
```

**register user with DDNA**

Dans une étape 160, le serveur d'authentification génère par conséquent un premier challenge, lequel est un objet renvoyé par le serveur ayant, entre autres, un champ "challenge" de type string. Dans un mode de réalisation particulier, le contenu du challenge est généré en intégrant un aléa généré par carte quantique intégré au serveur d'authentification.

De préférence, le challenge se présente de manière définie dans la RFC « ONE TIME PASSWORD » :

```
  otp-<identifiant de l'algorithme> <numéro séquence> <seed>
```

tel que par exemple otp-md5 487 dog2 venant préciser l'utilisation de l'algorithme de hash MD5, un numéro de séquence 487 et une semence égale à «dog2».

Dans un mode de réalisation particulier, l'inventeur a découvert qu'il était possible de renforcer de manière suprenante la robustesse de l'algorithme en optant pour une semence générée au moyen d'un générateur quantique assurant un aléa parfait. Un tel générateur quantique fonctionne sur le principe d'un choix d'un photon susceptible de traverser ou non une lame semi-réfléchissante.

Dès réception du premier challenge, l'application client ou l'applet génère, lors d'une étape 170, la réponse circonstanciée correspondant à ce premier challenge. Pour le détail de la réponse à transmettre au serveur, en fonction du challenge recu, l'on pourra s'inspirer par exemple des protocoles CHAP (*Challenge Hardward Authentication system*) bien connus d'un homme du métier. D'une manière générale, on observera que le procédé qui est décrit est adapté à l'emploi d'un grand nombre de variantes de challenge/response qui sont à la portée d'un homme du métier et qui ne seront pas développés plus avant.

Puis le procédé procède à la génération d'une **information d'authentification primaire** comportant :

- le LOGIN de l'utilisateur ;
- un hash du code PIN de l'utilisateur (e.g. le sha256 de la librairie open source cryptopp) ;
- la réponse au premier challenge.

Cette information d'authentification primaire est ensuite transmise au serveur d'authentification suivant un canal sécurisé HTTPs, par exemple.

Dans une étape 180, le serveur d'authentification 300, qui dispose au sein de sa base de données les informations d'identification (login , PIN) vérifie l'information d'authentificaiton primaire et transmet sa réponse, négative ou positive. Lorsque la réponse est positive, le serveur transmet un premier identifiant de session *sessionID1*, ce qui prouve l'existence de l'utilisateur dans la base et démarre le véritable dialogue d'authentification entre le client et le serveur.

A partir de ce moment, l'application cliente ou l'applet communique avec le serveur d'authentification 300 au moyen de l'identifiant de session *sessionID1* et non plus au moyen d'une identification de login conventionnel, lequel pourrait avoir été usurpé. Comme on le voit, on améliore ici significativement la sécurité du procédé d'authentification.

En effet, dans une étape 190, l'application cliente ou l'applet transmet un message de requête au serveur d'authentification 300 en utilisant l'information *Session ID1* et sollicite que lui soit transmise une information représentative du nombre d'empreintes ADNN et, pour chacune d'entre elles, la liste des classes de composants matériels (processeurs, périphériques, clés USB etc...) auxquelles elles correspondent. Il est à noter, et cela est important pour la compréhension du niveau de sécurité permis par le procédé, que les empreintes ADNN ne sont nullement transmises lors de cette étape 190... Seule une « liste » indiquant les identifiants des empreintes et la définition des classes correspondant à chaque élément de la « liste » fait l'objet de la transmission.

Dans une étape 200, le serveur d'authentification répond et transmet cette « liste » précisant le nombre d'empreintes ADNN et pour chacune d'entres elles, la définition des classes utilisées.

A suite de la réception de cette description, le procédé mis en oeuvre par l'applet entre dans une boucle, illustrée dans la figure 2 par les étapes 210-241 ou 210-242), laquelle boucle va tenter une authentification secondaire au moyen d'un traitement séquentiel de chacun des éléments de la liste d'empreintes reçue lors de l'étape 200.

En effet, pour chacune des empreintes listées dans la liste de l'étape 200, l'applet transmet, dans une étape 210 une message sollicitant un nouveau challenge, auquel le serveur répond, lors d'une étape 220 par un nouveau challenge, intégrant une semence (*seed*) (Nième challenge), basée sur le générateur quantique mentionné précédemment.

Puis, lors d'une étape 230, l'application cliente ou l'applet calcule l'information ADNN correspondant aux classes associées à l'empreinte considérée (et définie sur la liste de l'étape 200), et prépare une réponse au challenge de l'étape 220.

L'étape 230 s'achève par la transmission au serveur d'authentification des éléments d'authentification secondaires, lesquels comportent notamment les informations suivantes :

- l'identifiant de connexion SessionID2 (permettant de retrouver dans la base du serveur d'authentification le login de l'utilisateur)
- le hash du code PIN (si cette option a été choisie)
- le résultat du calcul de l'empreinte ADNN pour l'élément considéré de la liste de l'étape 200
- la réponse présumée valide ou invalide au Nième challenge quantique (un challenge par matériel trouvé dans la liste des empreintes ADNN pour l'utilisateur considéré).

Puis, le serveur d'authentification les éléments d'authentification puis envoie sa réponse négative (flèche 241) ou positive (flèche 242), comportant un identifiant secondaire de session *sessionID2.*

Dans le cas d'une réponse négative, l'application cliente tente une authentification secondaire basée sur l'élément suivant de la liste de l'étape 200 jusqu'à épuiser tous les éléments de cette liste et, dans ce cas, rejeter la demande d'authentification.

Au contraire, lorsque l'authentification secondaire a abouti, le procédé poursuit avec une étape 250 au cours de laquelle l'applet sollicite en utilisant le sessionID2 un « *passeport* » au bénéfice de l'utilisateur.

Dans une étape 260, le serveur d'authentification 300 répond avec un « passeport » crypté.

Dans un mode de réalisation particulier, le passeport est crée, chiffré et stocké lors de l'enrôlement de l'utilisateur (en intégrant ou non l'information ADNN), de la manière suivante :

Le logiciel client concatène dans un string :

- un UUID demandé au server
- une strongKey créée en générant un string aléatoire hashée en SHA256 avec une semence (seed)
- une privateKey (réservée à un usage ultérieur)

Ce passeport est ensuite chiffré par le logiciel client en AES en utilisant comme clé de chiffrement (strongkey) :

*PKCS_PBKDF2_HMAC<SHA256> (sha256(pin code user) + hash(ADNN) + magic number + seed)*

Le passeport est stocké sur le serveur d'authentification pour les authentifications ultérieures de l'utilisateur via sa strongkey.

Le passeport est stocké temporairement pendant la durée autorisée de la session (fixée par l'administrateur du système) sur le serveur d'authentification, valable pour toutes les authentifications de l'utilisateur sur le site web considéré. Le système peut également passer cette autorisation d'authentification de manière optionnelle à d'autres systèmes tels que RADIUS ou ACTIVE DIRECTORY.

Puis, dans une étape 270, l'applet décrypte le passeport pour récupérer la *strongkey* de l'utilisateur. Il utilise pour se faire le code PIN de l'utilisateur et l'ADNN du serveur d'authentification. Le client peut alors accéder de manière sécurisée au site web au moyen de la *strongkey.*

### III. Avantages de l'invention

Le processus d'authentification présente deux avantages majeurs : l'utilisateur n'a pas accès et ne connait donc pas l'ADN du Numérique car ce dernier est généré seul le challenge -qui est un hash- est envoyé.

L'ADN du numérique s'appuie sur des schémas standards de sécurité (https, Challenge Handshake Authentication Protocol (CHAP), SHA, AES...). La génération des challenges est basée sur un aléa quantique qui répond aux bonnes pratiques de sécurité les plus strictes.

Le secret partagé entre client et serveur se résume à une information relative à certains composants matériels du client et enfouie dans ces matériels, couplée à un challenge de type OTP. Cette information numérique de référence est désignée par l'appelation : « ADNN ». (ADN du numérique ®))

La protection de cette information est assurée de la manière suivante :

- Import sécurisé des paramètres d'enrôlement et d'authentification : les caractéristiques matérielles du poste client que l'application va collecter (soit tout ou partie des composants du poste et/ou un ou plusieurs périphériques amovibles) sont importés du serveur via un protocole sécurisé (chiffrement SSL).

- Transfert sécurisé des données d'enrôlement et d'authentification vers le serveur : les données matérielles choisies par l'utilisateur pour être enrôlées sont collectées par l'application puis transmises vers le serveur au travers d'un protocole sécurisé (https). Ce protocole s'appuie sur un échanges de clé initié par le serveur au début de la session et par un chiffrement AES des données avant transmission. Il y a également un ajout de *seed « une graine »* et de timestamp pour assurer la sécurité et la validité des messages.

- Protection des données rémanentes : toutes les données rémanentes sensibles (clés AES, données matérielles, paramètres) sont effacées des mémoires du PC hôte à la fin de la session.

- Intégration d'un double challenge-réponse pour interdire le rejeu : le protocole d'échanges des données entre le serveur et le client intègre une protection contre le rejeu des trames d'authentification, basé sur l'échange de challenges et sur une fenêtre temporelle à respecter pour réaliser l'échange. L'algorithme de chiffrement utilisé est l'AES 256 en mode CBC. Pour le challenge/réponse, l'algorithme utilisé est le HMAC-SHA256.

- Encapsulation de l'enveloppe PKCS#11 dans l'enveloppe X9.84 contenant l'ADN Numérique : pour être conforme à l'interopérabilité des solutions d'authentification existantes, le système dispose optionnellement de deux bibliothèques pour la gestion des codes PIN / PUK :

- Bibliothèque PKCS#11 permettant pour les applications non Microsoft une communication normalisée avec les commandes PIN de l'ADN.

Dans cette gestion, on retrouve notamment la durée de vie du PIN, le nombre d'essai du PIN, l'activation / désactivation du code PUK.

Toutes les règles de sécurité du PKCS#11 sont incorporées dans la bibliothèque de l'ADN du numérique®.

- Bibliothèque CSP : permettant pour les applications Microsoft (IE, Outlook, Windows) une interopérabilité avec l'ADN numérique liée à un 2ème facteur qu'est le code PIN.

A noter que la communication entre les DLL PKCS#11, CSP et l'ADN Numérique sont signées par un certificat qui peut être signé par l'AC du client tout comme l'ensemble des DLL et Services de l'ADN du numérique®.

- Appliquette signée (personnalisée par code PIN) numériquement par un certificat X509v3 ce qui aide à détecter les tentatives de *phishing.*

- Verrouillage du code: Le code exécutable de l'ADN du Numérique® est protégé par *obfuscation* contre le désassemblage. Des mesures de sécurité sont également implémentées afin de renforcer la sécurité lors de l'exploitation (fermeture de la session forcée après une période d'inactivité ou une erreur par exemple). Enfin, les assembly (DLL et exécutables) sont signées.

De même, le fournisseur de l'application peut identifier un mécanisme d'authentification de secours, pour permettre à un utilisateur qui a perdu son IHS utilisé pour l'accès d'authentification de l'application protégée. C'est sa responsabilité de s'assurer que ce mécanisme de secours présente un compromis acceptable entre le niveau de risque et de la frustration des utilisateurs. L'approche recommandée consiste à avoir chaque utilisateur autorisé inscrire plusieurs IHS.

Dans un mode de réalisation préféré, l'invention est conforme à la norme IEEE-802 de services et de la famille des protocoles de norme relative aux réseaux locaux (LAN) et réseaux métropolitains (MAN).

L'invention peut trouver des applications dans des situations logiques de contrôle d'accès, en particulier, mais pas nécessairement lorsque la norme de sécurité ANSI X9.84 doive être respectée. Elle peut également être utilisée pour reconnaître un utilisateur chaque fois qu'il revient sur un site web, comme le font les "cookies" souvent utilisés dans de tels environnements.

Le contrôle d'accès logique se réfère à la pratique de la limitation de l'accès aux ressources logiques, telles que les applications numériques ou les données numériques.

Le contrôle d'accès logique se trouve principalement dans les environnements d'entreprise, pour contrôler l'accès à un réseau privé dans les locaux d'une entreprise (par exemple via un réseau local) ou d'accéder aux données depuis l'extérieur de la société vers les locaux de l'entreprise (par exemple via un réseau privé virtuel). De plus en plus souvent, le contrôle d'accès logique est nécessaire en fonction des environnements web, soit pour accéder aux données sensibles (santé, services bancaires, etc) ou pour confirmer des transactions par exemple de commerce électronique, les opérations financières, de gestion de contenu web, les réseaux sociaux, etc.

L'invention est bien adaptée à apporter une garantie suffisante à l'ensemble de ces opérations.

Dans de nombreuses situations, où le vol d'identité numérique est en jeu, mais la véritable identité de l'utilisateur n'a pas d'importance, une simple procédure d'inscription en ligne peut suffire couplée avec l'ADN du numérique.

Dans les situations où un accès illimité à un service est lié au paiement d'un abonnement, l'invention est beaucoup plus efficace qu'un mot de passe pour limiter la fraude résultant du partage du mot de passe avec d'autres utilisateurs non autorisés.

Une autre utilisation de l'invention réside dans l'accès au site sans demander à l'utilisateur son identifiant, et où la question primordiale n'est pas la nécessité de reconnaître précisément un utilisateur parmi tous les utilisateurs autorisés. L'invention fournit le même niveau de confiance, sans avoir à déranger l'utilisateur en lui demandant d'entrer son identifiant.

Une autre utilisation réside dans la nécessité pour les prestataires de nombreuses applications d'être conscients de savoir si le visiteur est nouveau ou ancien. L'invention est plus efficace que les cookies, car l'ADN numérique de l'utilisateur IHS ne peut être caché, alors que les cookies le peuvent.

Les domaines d'application de l'invention sont les plus divers sur internet: les services bancaires en ligne, l'e-commerce, e-gouvernement, abonnements à base de web (revues, musique, vidéo), e-gaming, les réseaux sociaux, ne sont que quelques exemples de domaines où l'invention peut être utilisée avec profit.

## Revendications

1. Procédé d'authentification basé sur la collecte de données représentatives de composants matériels contenus dans un système de traitement de l'information (I.H.S.) d'un utilisateur, dit système utilisateur, ledit système utilisateur communiquant avec un site web et un serveur d'authentification stockant des informations d'identification (login, PIN attribué à l'utilisateur) ainsi que des empreintes (ADNN) associées à des éléments matériels susceptibles d'être présents dans le système de l'utilisateur générées à partir d'informations directement lues sur ces mêmes éléments matériels lors d'une procédure d'enrôlement, ledit procédé comportant les étapes suivantes :

- une première demande de connexion (110) transmise audit site web via un logiciel navigateur dudit système utilisateur ;

- réception par ledit système utilisateur (120) d'une page web et d'un code exécutable par un logiciel navigateur en réponse à ladite connexion pour la mise en oeuvre des étapes effectuées par le système utilisateur parmi les étapes suivantes auprès dudit serveur d'authentification;

- une seconde demande de connexion (130) transmise audit serveur d'authentification via le logiciel navigateur du système utilisateur afin de solliciter des paramètres d'authentification correspondant audit système utilisateur et stockés sur ledit serveur d'authentification, lesdits paramètres d'authentification comprenant une liste de classes de matériels et composants éligibles pour le calcul d'une information numérique de référence (ADNN) dudit système utilisateur;

- transmission (140) par ledit serveur d'authentification audit système utilisateur desdits paramètres d'authentification ;

- transmission (150) par ledit système utilisateur d'une première requête audit serveur d'authentification visant à solliciter un premier challenge (150), ;

- génération (160) par ledit serveur d'authentification d'un premier challenge et transmission dudit premier challenge audit système utilisateur;

- transmission (170) par ledit système utilisateur d'une information d'authentification primaire destinée audit serveur d'authentification, ladite information d'authentification primaire comportant :

- un LOGIN de l'utilisateur dudit système utilisateur ;
- un hash d'un code PIN attribué audit utilisateur ;
- une réponse audit premier challenge générée par ledit système utilisateur ;

- vérification (180) par ledit serveur d'authentification de ladite information d'authentification primaire transmise par ledit système de l'utilisateur à partir d'informations dont il dispose et transmission d'une réponse circonstanciée, positive ou négative audit système utilisateur, la réponse positive comportant un premier identifiant de session (sessionID1) transmis audit système de l'utilisateur et servant pour la communication ultérieure entre ledit système utilisateur et ledit serveur d'authentification;

- transmission (190) par ledit système utilisateur d'une requête audit serveur d'authentification basée sur ledit premier identifiant de session, ladite requête sollicitant une information représentative du nombre d'empreintes stockées sur ledit serveur d'authentification et, pour chacune d'entre elles, la liste des classes de composants matériels auxquelles elles correspondent, les dites empreintes (ADDN) étant associées à des matériels susceptibles d'être présents dans le système de l'utilisateur ;

- transmission (200) audit système utilisateur par ledit serveur d'authentification d'une liste comportant le nombre d'empreintes stockées sur ledit serveur d'authentification et, pour chacune d'entres elles, la définition des classes utilisées correspondant aux différents éléments matériels utilisés pour la génération de l'empreinte considérée ;

- pour chacune des empreintes présentes sur la liste reçue par ledit système utilisateur effectuer les étapes suivantes (210-241) dites étapes d'authentification secondaire ;

- transmission (210) par le système utilisateur d'une requête sollicitant un nouveau challenge audit serveur d'authentification ;

- transmission audit système utilisateur d'un nouveau challenge (220) généré par ledit serveur d'authentification - calcul de l'empreinte basé sur différentes informations extraites des composants matériels correspondant aux classes associées à l'empreinte considérée ;

- transmission par ledit système utilisateur d'une réponse (230) comportant une information d'authentification secondaire audit serveur d'authentification, ladite information d'authentification secondaire comportant :

• un identifiant de connexion (login) associé à la connexion au site web ;
• l'empreinte calculée ;
• un hash ;
• une réponse au nouveau challenge

- vérification par le serveur d'authentification de l'information d'authentification secondaire contenue dans ladite réponse audit nouveau challenge, et transmission d'une réponse (241, 242) audit système utilisateur, une réponse positive comportant un second identifiant de session (sessionID2) alors qu'une réponse négative provoque l'exécution des étapes d'authentification secondaire pour un nouvel élément des empreintes reçues dudit serveur d'authentification;

- dans le cas d'une réponse positive, transmission (250) par le système utilisateur d'une demande de passeport associée audit second identifiant de session (session ID2) reçu avec la réponse positive ;
- transmission (260) par ledit serveur d'authentification du passeport sous une forme cryptée ;
- décryptage par ledit système utilisateur dudit passeport nécessaire à l'accès audit site web.

2. Procédé d'authentification selon la revendication 1 **caractérisé en ce que** la transmission (150) par ledit système utilisateur de ladite première requête audit serveur d'authentification visant à solliciter un premier challenge (150) est conforme à la norme RFC2289.

## Patentansprüche

1. Authentifizierungsverfahren basierend auf der Sammlung von repräsentativen Daten für Hardwarekomponenten in einem Informationsverarbeitungssystem (I.H.S. - Information Handling System) eines Nutzers, genannt Nutzersystem, wobei das Nutzersystem mit einer Website und einem Authentifizierungsserver verbunden ist, der Informationen zur Identifizierung speichert (Log-in, PIN des Nutzers) sowie Fingerabdrücke (digitale DNA), verbunden mit materiellen Elementen, die im System des Nutzers vorhanden sein können, erzeugt ausgehend von Informationen, die direkt auf diesen materiellen Elementen anlässlich einer Erfassungsprozedur abgelesen werden, wobei das Verfahren die folgenden Schritte umfasst:

- eine erste Verbindungsanfrage (110) die an die genannte Website über einen Browser des genannten Nutzersystems übertragen wird;
- Empfang, durch das Nutzersystem (120), einer Webseite und eines von einem Browser ausführbaren Codes als Reaktion auf die Verbindung zur Umsetzung der vom System durchgeführten Phasen unter den folgenden Phasen beim genannten Authentifizierungsserver;
- eine zweite Verbindungsanfrage (130), die an den Authentifizierungsserver über den Browser des Nutzersystems übertragen wird, um Authentifizierungsparameter anzufordern, die dem Nutzersystem entsprechen und auf dem Authentifizierungsserver gespeichert sind, wobei die Authentifizierungsparameter eine Liste von Klassen von Materialien und Bestandteilen umfassen, die relevant für die Berechnung einer digitalen Referenzinformation (digitale DNA) des genannten Nutzersystems sind;
- Übertragung (140) der genannten Authentifizierungsparameter durch besagten Authentifizierungsserver an das Nutzersystem;
- Übertragung (150), durch das Nutzersystem, einer ersten Anfrage an den Authentifizierungsserver, um eine erste Challenge (150) anzufordern;
- Erzeugung (160), durch den Authentifizierungsserver, einer ersten Challenge und Übertragung der ersten Challenge an das Nutzersystem;
- Übertragung (170), durch das Nutzersystem, einer primären Authentifizierungs-Information an den Authentifizierungsserver, wobei die primäre Authentifizierungs-Information folgendes umfasst:
- ein Log-in des Nutzers des genannten Nutzersystems;
- einen Hash eines PIN-Codes des Nutzers;
- eine Antwort auf die erste vom Nutzersystem erzeugte Challenge;
- Prüfung (180), durch den Authentifizierungsserver, der vom Nutzersystem übertragenen primären Authentifizierungs-Information ausgehend von Information, über die er verfügt, und Übertragung einer positiven oder negativen detaillierten Antwort an das Nutzersystem, wobei die positive Antwort eine erste Sitzungs-ID (sessionJD1) umfasst, die an das Nutzersystem übertragen wird und zur weiteren Kommunikation zwischen besagtem Nutzersystem und dem Authentifizierungsserver dient;
- Übertragung (190), durch das Nutzersystem, einer Anfrage an den Authentifizierungsserver basierend auf besagter erster Sitzungs-ID, wobei die Anfrage eine repräsentative Information für die Zahl der auf besagtem Authentifizierungsserver gespeicherten Fingerabdrücke anfordert, und, für jeden davon, die Liste der Klassen von Hardwarekomponenten, denen sie entsprechen, wobei die Fingerabdrücke (ADDN) mit Materialien verbunden sind, die im Nutzersystem vorhanden sein können;
- Übertragung (200) an das Nutzersystem, durch besagten Authentifizierungsserver, von einer Liste mit der Zahl von auf dem Authentifizierungsserver gespeicherten Fingerabdrücken und, für jeden davon, der Definition der benutzten Klassen, entsprechend den verschiedenen Hardware-Elementen, die zur Erzeugung des jeweiligen Fingerabdrucks benutzt wurden;
- für jeden der Fingerabdrücke auf der vom Nutzersystem empfangenen Liste sind die folgenden Schritte (210-241) durchzuführen, genannt sekundäre Authentifizierungsphasen:
- Übertragung (210), durch das Nutzersystem, einer Anfrage nach einer neuen Challenge an den Authentifizierungsserver;

- Übertragung einer neuen vom Authentifizierungsserver erzeugten Challenge (220) an das Nutzersystem
- Berechnung des Fingerabdrucks basierend auf verschiedenen Informationen aus den Hardwarekomponenten entsprechend den Klassen, die mit dem jeweiligen Fingerabdruck verbunden sind
- Übertragung, durch besagte Nutzersystem, einer Antwort (230) mit einer sekundären Authentifizierungs-Information an den Authentifizierungsserver, wobei die sekundäre Authentifizierungs-Information folgendes umfasst:
- einen Anmeldenamen (Log-in) für die Verbindung zur Website;
- den berechneten Fingerabdruck;
- einen Hash;
- eine Antwort auf die neue Challenge;
- Prüfung, durch den Authentifizierungsserver, der sekundären Information in der Antwort auf die neue Challenge, und Übertragung einer Antwort (241, 242) an das Nutzersystem, wobei eine positive Antwort eine zweite Sitzungs-ID (sessionID2) umfasst, während eine negative Antwort die Ausführung der vom Authentifizierungsserver empfangenen sekundären Authentifizierungsphasen bewirkt;
- bei positiver Antwort Übertragung (250), durch das Nutzersystem, eines Passantrags, verbunden mit der zweiten Sitzungs-ID (Sitzung ID2), die mit der positiven Antwort empfangen wurde;
- Übertragung (260), durch den Authentifizierungsserver, des Passes in verschlüsselter Form;
- Entschlüsselung, durch das Nutzersystem, des Passes, das für den Zugang zur genannten Website notwendig ist.

2. Authentifizierungsverfahren nach Anspruch 1, **gekennzeichnet dadurch, dass** die Übertragung (150), durch das Nutzersystem, der ersten Anfrage an den Authentifizierungsserver, um eine erste Challenge (150) anzufordern, konform mit der Norm RFC2289 ist.

## Claims

1. An authentication method based on the collection of data representative of hardware components included in an Information Handling System (I.H.S.) of a user, designated user system, said user system communicating with a web site and with a authentication server wherein are stored identification data (login, user PIN) as well as signatures (ADNN), associated to hardware components likely to be present within the user system, the signatures being generated from information which is directly read on said hardware components during an enrollment phase, said method comprising the following steps:

- a transmission of a first connection request (110) to said web site via a web browser software of said user system;
- a receipt by said user system (120) of a web page and executable code that can be executed by said web browser software in response to said connection for the purpose of the execution of steps by said user system with said authentication server among the following steps :
- a transmission of a second connection request (130) to said authentication server via the web browser software (130) of said user system so as to request authentication parameters corresponding to said user system and stored into said authentication server, said authentication parameters comprising a list of classes of hardware and components which can be used for the computation of a reference digital information (ADDN) of said user system;
- a transmission (140) of said authentication parameters by said authentication server to said user system;
- a transmission (150) of a first request to said authentication server by said user system for the purpose of requesting a first challenge (150);
- a generation (160) by said authentication server of a first challenge and transmission of said first challenge to said user system;
- a transmission (170) by said user system of a primary authentication information intended to said authentication server , said primary authentication information comprising:

- a login of the user of said user system;
- a hash of a PIN code assigned to said user;
- a response to said first challenge generated by said user system;

- the checking (180) by said authentication server of said primary authentication information transmitted by said user system on the basis of information being available and the transmission of an adequate response, positive

14

or negative to said user system, a positive response comprising a first session identifier (sessionID) transmitted to said user system and used for the subsequent communication between said user system and said authentication server;

- the transmission (190) by said user system of a request to said authentication server based on said first session identifier, said request requesting an information representative of the number of signatures stored within said authentication server and, for each of them, the list of classes of hardware components to which they correspond, said signatures (ADDN) being associated to hardware component which are likely to be present within the user system;

- the transmission (200) by said authentication server of a list comprising the number of signatures stored on said authentication server and, for each signature, the definition of the classes used and corresponding to the different hardware components used for the generation of the signature being considered;

- for each signature being listed on the list received by said user system, execute the following - so called secondary authentication steps (210-241):

    - transmission (210) by said user system of a request requesting a new challenge from said authentication server;

    - transmission to said user system of a new challenge (220) generated by said authentication server;

    - computation of the signature on the basis of the different pieces of information extracted from the hardware component corresponding to the classes associated to the signature being considered;

    - transmission by said user system to said authentication server of a response (230) comprising a secondary authentication information, said secondary authentication information comprising:

        • a connection identifier (login) associated to the connection with the web site;
        • the signature calculated ;
        • a hash
        • a response to the new challenge

    - the checking by the authentication server of the secondary authentication information comprised within said response to the new challenge, and transmission of a response (241, 242) to said user system, a positive response comprising a second session identifier (sessionID2) while a negative response resulting in the execution of the secondary authentication steps for a new element of the listed signatures received from said authentication server;

    - in the case of a positive response, the transmission (250) by said user system of a passport request associated to said second session identifier (sessionID2) received with a positive response;

    - the transmission (260) by said authentication server of the passport having a enciphered form;

    - the deciphering by said user system of said passport so as to allow the access to said web site.

**2.** The authentication method according to claim 1 **characterized in that** the transmission (150) by said user system of the first request to said authentication server for the purpose of obtaining the first challenge (150) is made in compliance with the RFC2289 standards.

Connexion à un site web

↓

10

Réception page web + plugin

20

Détection des composants matériels

30

Sélection par l'utilisateur de composants
à intégrer dans l'empreinte ADNN

40

Génération de l'empreinte ADDN

50

Integration de l'empreinte ADDN
dans un OTP

60

# Fig. 1

Client
100

Site web
200

Serveur
authentification
300

110 connexion

120 page web + plugin

demande paramètres d'authentification 130

140 transmission paramètres d'authentification

demande de challenge 150

160 Challenge1

Eléments d'authentification primaire 170

180 Session ID1

Liste empreintes ADN stockées 190

200 liste description/type ADN par empreinte

Sélection
composants éligibles

demande de challenge 210

220 Nième challenge quantique

Eléments d'authentification secondaires 230

Pour
Chaque
Empreinte

241 Ko

242 SessionId2

demande de passport 250

260 passport crypté

Décryptage
du passport
et récup UUID

Accès site sécurisé 270

# Fig. 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 04368072 A
- EP 1669833 A1
- US 2007186103 A1
- US 6678731 B
- US 2002026576 A1
- US 6826686 B1

**Littérature non-brevet citée dans la description**

- **HALEVI S et al.** PUBLIC-KEY CRYPTOGRAPHY AND PASSWORD PROTOCOLS. *ACM CONFERENCE ON COMPUTER AND COMMUNICATIONS SECURITY,* 02 Novembre 1998, vol. XX, XX, 122-131